(19) Europäisches Patentamt
European Patent Office
Office européen des brevets

(11) EP 2 745 900 B1

# (12) EUROPEAN PATENT SPECIFICATION

(45) Date of publication and mention of the grant of the patent:
**03.01.2018 Bulletin 2018/01**

(21) Application number: **12823449.9**

(22) Date of filing: **09.08.2012**

(51) Int Cl.:
***B01D 1/16*** (2006.01) ***C08F 6/14*** (2006.01)
***B01D 1/12*** (2006.01) ***B01D 1/20*** (2006.01)
***B01D 19/02*** (2006.01) ***C11D 1/04*** (2006.01)
***B01D 3/06*** (2006.01)

(86) International application number:
**PCT/JP2012/070380**

(87) International publication number:
**WO 2013/024790 (21.02.2013 Gazette 2013/08)**

## (54) PROCESS FOR CONCENTRATING AND RECOVERING SURFACTANT AQUEOUS SOLUTION

VERFAHREN ZUR VERDICHTUNG UND RÜCKGEWINNUNG EINER WÄSSRIGEN LÖSUNG AUS EINEM TENSID

PROCÉDÉ PERMETTANT DE CONCENTRER ET DE RÉCUPÉRER UNE SOLUTION AQUEUSE D'UN AGENT DE SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2011 JP 2011178859**

(43) Date of publication of application:
**25.06.2014 Bulletin 2014/26**

(73) Proprietor: **Asahi Glass Company, Limited**
**Tokyo 100-8405 (JP)**

(72) Inventors:
- **FUTAGAWA, Norifumi**
  **Tokyo 100-8405 (JP)**
- **NAGANO, Shigeyuki**
  **Chiba 290-0037 (JP)**

(74) Representative: **Müller-Boré & Partner Patentanwälte PartG mbB**
**Friedenheimer Brücke 21**
**80639 München (DE)**

(56) References cited:
**EP-A1- 0 890 582**
**EP-A1- 1 714 986**
**JP-A- S5 966 302**
**JP-A- 2005 131 616**
**JP-A- 2007 283 224**
**US-A- 3 420 450**
**US-A- 4 158 092**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

TECHNICAL FIELD

The present invention relates to a process for concentrating and recovering a surfactant aqueous solution.

BACKGROUND ART

A technique is known for recovering and recycling, from a surfactant aqueous solution containing a surfactant and an aqueous solvent, such as an aqueous solution having, from an aqueous dispersion of a polymer obtained by emulsion polymerization in the presence of a surfactant, the polymer removed, the surfactant.

As a method for recovering a surfactant, for example, a method of recovering a surfactant in a surfactant aqueous solution by adsorption with an ion exchange resin (hereinafter referred to as "IER") may be mentioned. However, by this method, although the surfactant can be adsorbed with high efficiency, if it is difficult to let the surfactant be desorbed from the IER with a sufficient desorption rate, this method is not suitable for recovery of the surfactant.

Further, a method is also known which evaporates and concentrate the surfactant aqueous solution, increases the concentration of the surfactant and recovers it. However, by this method, if the surfactant is to be recovered in a state of an alkali metal salt, an ammonium salt or the like, the surfactant is likely to foam, and foaming occurs in an evaporative concentrator, thus lowering the recovery efficiency.

As a method of suppressing foaming during the evaporative concentration, a method is known in which a bivalent metal and a trivalent metal are added to the surfactant aqueous solution to form a layered double hydroxide, whereby foaming hardly occurs, and the surfactant aqueous solution is evaporated and concentrated in such a state to increase the concentration of the surfactant and to recover the surfactant. However, by this method, it is difficult to reproduce the surfactant from the layered double hydroxide, and this method is not suitable for recovery of the surfactant.

As a method of increasing the concentration of the surfactant and recovering it in a state where the surfactant can efficiently be recycled, while foaming of the surfactant aqueous solution is suppressed, for example, the following processes have been proposed.

(1) A process of storing the surfactant aqueous solution in an evaporator, withdrawing a part of the surfactant aqueous solution from the evaporator, heating it, spraying it from a nozzle (spray nozzle) having a shape such that the outlet side once narrows, provided at the upper portion of the evaporator, into the evaporator to flush-evaporate the aqueous medium, and removing the aqueous solvent for concentration while circulating the surfactant aqueous solution (Patent Document 1).

By this process, the surfactant aqueous solution becomes in the nozzle a liquid under a pressure higher than the pressure in the evaporator at a temperature higher than the boiling point of the aqueous solvent under the pressure in the evaporator. Thus, when the surfactant aqueous solution is sprayed from the nozzle and released to the pressure in the evaporator (the pressure lower than the pressure in the nozzle), in order to lower the temperature to the boiling point of the aqueous solvent under the pressure in the evaporator, the potential heat is discharged as the latent heat of vaporization and a part of the aqueous solvent is vaporized, thus forming a concentrated liquid and a vapor of the aqueous solvent. By this process, even if bubbles form in the surfactant aqueous solution in the evaporator, the bubbles are broken by the concentrated liquid sprayed from the nozzle, thus preventing foaming.

(2) A process of superheating the surfactant aqueous solution to form a gas-liquid two phase flow (intermittent flow or annular flow) in which a part of the aqueous solvent is vaporized, supplying it into an evaporator through a plurality of straight pipes provided at the upper portion of the evaporator, and removing the vapor of the aqueous solvent to obtain a concentrated liquid (Patent Document 2). The following prior art is cited EP0890582A3 and further documents:

Patent Document 1: JP-A-63-54901
Patent Document 2: JP-A-2005-131616

DISCLOSURE OF INVENTION

TECHNICAL PROBLEM

However, by the above process (1), it is difficult to sufficiently obtain the effect to suppress foaming by the concentrated liquid sprayed from the nozzle.

Further, by the process (2), it is difficult to uniformly supply the gas-liquid two phase flow of the superheated surfactant aqueous solution to the respective straight pipes, and the superheated surfactant aqueous solution unevenly flows into some straight pipes, and the concentrated liquid supplied from the straight pipes to the evaporator may let the air in when it falls down on the liquid level of the concentrated liquid staying in the evaporator, thus leading to foaming.

In the process (1) or (2), it is considered to use an antifoaming agent to suppress foaming, however, in a case where the surfactant is recycled, a step of removing the antifoaming agent is necessary after concentration, such being troublesome.

It is an object of the present invention to provide a process for concentrating and recovering a surfactant, by which a surfactant aqueous solution can be evaporated and concentrated while suppressing foaming, and a surfactant aqueous solution in which the concentration of the surfactant is increased, can easily be obtained with high efficiency.

SOLUTION TO PROBLEM

To achieve the above object, the present invention provides the subject-matter as defined in the claims.

ADVANTAGEOUS EFFECTS OF INVENTION

According to the process for concentrating and recovering a surfactant aqueous solution of the present invention, the surfactant aqueous solution can be evaporated and concentrated while suppressing foaming, a surfactant aqueous solution having an increased concentration can easily be obtained with high efficiency, and the surfactant can be recovered.

BRIEF DESCRIPTION OF DRAWINGS

Fig. 1 is a view schematically illustrating one example of a concentration/recovery apparatus used for the process of the present invention.

Fig. 2 is a cross-sectional view illustrating a nozzle of the concentration/recovery apparatus in Fig. 1

Fig. 3 is a graph illustrating the flow state of a superheated fluid (cited from the revised sixth edition, Kagaku Kogyo Binran (Chemical Engineering Handbook), published by The Society of Chemical Engineers, Japan, page 299, Fig. 5-20).

Fig. 4 is a drawing illustrating the flow state of a superheated fluid.

DESCRIPTION OF EMBODIMENTS

The process for concentrating and recovering a surfactant aqueous solution of the present invention is a process of evaporating and concentrating a surfactant aqueous solution containing a gasifiable surfactant (hereinafter sometimes referred to as surfactant (a)) and an aqueous solvent to increase the concentration of the surfactant and recover it. By the process of the present invention, the surfactant can be concentrated and recovered in a state where it can be recycled with high efficiency.

As the surfactant (a) in the present invention, any of an anionic surfactant, a cationic surfactant, an amphoteric surfactant and a nonionic surfactant may be used so long as it is a gasifiable surfactant. Further, either of a hydrocarbon type surfactant and a fluorinated surfactant may be used.

The surfactant (a) is preferably a surfactant, reuse of which is required due to high cost or production cost. Further, preferred is a surfactant, discharge of which to the environment is suppressed.

The surfactant (a) may be a fluorinated surfactant, and is preferably a fluorinated surfactant having from 4 to 10 carbon atoms constituting the fluorinated surfactant, more preferably a fluorinated surfactant having from 4 to 8 carbon atoms, most preferably a fluorinated surfactant having from 4 to 7 carbon atoms. A fluorinated surfactant having carbon atoms within the above range is excellent in the polymerization stability at the time of production of a fluorinated polymer. Further, a fluorinated surfactant having from 4 to 7 carbon atoms has low bioaccumulation property.

The fluorinated surfactant is more preferably at least one member selected from the group consisting of a fluorinated carboxylic acid containing from 1 to 4 etheric oxygen atoms in its molecule and its salt, a perfluoroalkylcarboxylic acid and its salt, and a fluorinated sulfonic acid and its salt. Specific examples of the fluorinated carboxylic acid having from 1 to 4 etheric oxygen atoms in its molecule include $CF_3OCF_2CF_2OCF_2COOH$, $C_2F_6OCF_2CF_2OCF_2COOH$, $C_3F_7OCF_2CF_2OCF_2COOH$, $C_4F_6OCF_2CF_2OCF_2COOH$, $C_5F_{11}OCF_2CF_2OCF_2COOH$, $C_6F_{13}OCF_2CF_2OCF_2COOH$, $CF_3O(CF_2CF_2O)_2OCF_2COOH$, $C_2F_6O(CF_2CF_2O)_2OCF_2COOH$, $C_3F_7O(CF_2CF_2O)_2CF_2COOH$, $C_4F_9O(CF_2CF_2O)_2CF_2COOH$, $CF_3O(CF_2CF_2O)_3OCF_2COOH$, $C_2F_5O(CF_2CF_2O)_3OCF_2COOH$, $CF_3OC(CF_3)CF_2OCF(CF_3)COOH$, $CF_3CF_2OC(CF_3)CF_2OCF(CF_3)COOH$, $CF_3CF_2O(CF_2)_6COOH$, $CF_3OC_3F_6OCF(CF_3)COOH$, $C_3F_7OC_3F_6OCF(CF_3)COOH$, $C_3F_7OCF(CF_3)CF_2OCHFCOOH$, $C_4F_9OCF_2COOH$, $CF_3OCF_2CF_2COOH$, $C_2F_5OCF_2CF_2COOH$, $C_3F_7OCF_2CF_2COOH$, $CF_3O(CF_2)_3OCHFCOOH$, $CF_3OCF_2OCF_2OCF_2COOH$, $C_4F_9OCF(CF_3)COOH$, $C_4F_9OCF_2CF_2COOH$, $CF_3OCF_2CF_2CF_2OCF_2COOH$,

$CF_3CFHO(CF_2)_5COOH$, $CF_3O(CF_2)_3OCHFCF_2COOH$, $CF_3OCF_2OCF_2OCF_2OCF_2COOH$, $C_3F_7OCHFCF_2COOH$, $CF_3CFHO(CF_2)_3COOH$ and $C_3F_7OCHFCOOH$. Further, the alkali metal forming the salt is preferably Li, Na, K or the like. Further, the salt of the fluorinated carboxylic acid having from 1 to 4 etheric oxygen atoms in its molecule may, for example, be a salt of e.g. Li, Na, K or $NH_4$ with the above compound.

Specific examples of the perfluoroalkylcarboxylic acid include perfluorohexanoic acid, perfluoroheptanoic acid, perfluorooctanoic acid, perfluorononanoic acid and ω-hydroperfluorooctanoic acid. Further, the salt of the perfluoroalkylcarboxylic acid may be a salt of e.g. Li, Na, K or $NH_4$ with the above compound.

The fluorinated surfactant is more preferably at least one fluorinated surfactant selected from the group consisting of a compound represented by the following formula (1) (hereinafter referred to as compound (1)) and a compound represented by the following formula (2) (hereinafter referred to as compound (2)):

$$R^{F1}O(CF_2CF_2O)_aCF_2COOX^1 \quad (1)$$

$$CF_3(CF_2)_bCOOX^2 \quad (2)$$

wherein $R^{F1}$ is a $C_{1-4}$ perfluoroalkyl group, $X^1$ is a hydrogen atom, an alkali metal or $NH_4$, and a is an integer of from 1 to 3; and $X^2$ is a hydrogen atom, an alkali metal or $NH_4$, and b is an integer of from 3 to 7.

The alkali metal as each of $X^1$ and $X^2$ may, for example, be Li, Na or K.

The compound (1) is more preferably $CF_3OCF_2CF_2OCF_2COOH$, $C_2F_6OCF_2CF_2OCF_2COOH$, $C_3F_7OCF_2CF_2OCF_2COOH$, $C_4F_9OCF_2CF_2OCF_2COOH$, $C_5F_{11}OCF_2CF_2OCF_2COOH$, $C_6F_{13}OCF_2CF_2OCF_2COOH$, $CF_3O(CF_2CF_2O)_2OCF_2COOH$, $C_2F_5O(CF_2CF_2O)_2OCF_2COOH$, $C_3F_7O(CF_2CF_2O)_2CF_2COOH$, $C_4F_3O(CF_2CF_2O)_2CF_2COOH$, $CF_3O(CF_2CF_2O)_3OCF_2COOH$, $C_2F_6O(CF_2CF_2O)_3OCF_2COOH$ or an ammonium salt thereof, most preferably an ammonium salt of $C_2F_6OCF_2CF_2OCF_2COOH$ (hereinafter referred to as "EEA").

The compound (2) is more preferably perfluorohexanoic acid, perfluoroheptanoic acid, perfluorooctanoic acid, perfluorononanoic acid or an ammonium salt thereof, more preferably ammonium perfluorooctanoate (hereinafter referred to as "APFO") or ammonium perfluorononanoate (hereinafter referred to as "APFN").

Among them, in view of good heat stability, more preferred is APFO or APFN, particularly preferably is APFN.

The hydrocarbon type surfactant is preferably an anionic surfactant such as a sodium salt of a fatty acid such as dodecanoic acid or stearic acid, sodium lauryl sulfate or sodium dodecylbenzenesulfonate.

The aqueous solvent in the present invention is a solvent containing water as an essential component and containing an organic solvent as the case requires.

The organic solvent contained in the aqueous solvent may be a hydrocarbon type solvent or a fluorinated solvent. Further, it may be water-soluble or water-insoluble. The boiling point (normal boiling point) of the organic solvent is preferably from 50 to 90°C, more preferably from 50 to 70°C, most preferably from 50 to 65°C.

Specific examples of the hydrocarbon type solvent include a ketone such as acetone or methyl ethyl ketone, an alcohol such as methanol or ethanol, an ester such as ethyl acetate, and an ether such as tetrahydrofuran.

Specific examples of the fluorinated solvent include a chlorohydrofluorocarbon such as 1,1,1,2,2-pentafluoro-3,3-dichloropropane, a hydrofluorocarbon such as $CF_3(CF_2)_5H$ or $CF_3(CF_2)_3CH_2CH_3$, and a hydrofluoroether such as $CF_3CH_2OGF_2CF_2H$, $CF_3CH_2OCF_2CFHCF_3$, $HCF_2CF_2CH_2OCF_2CFHCF_3$ or $C_4F_9OCH_3$.

In a case where the aqueous solvent contains an organic solvent having a boiling point higher than that of water, in order to prevent boiling under the liquid level by water, the content of the organic solvent in the aqueous solvent (100 mass%) is preferably at least 70 mass%, more preferably at least 90 mass%. In such a case, the content of the organic solvent is preferably at most 99 mass%.

Further, in a case where the aqueous solvent contains an organic solvent having a boiling point lower than that of water, in order to prevent boiling under the liquid level, the content of the organic solvent is preferably at most 30 mass%, more preferably at most 10 mass%. In such a case, the content of the organic solvent is preferably at least 1 mass%.

Further, by a sufficient amount of the solvent vaporized, it is possible to prevent the surfactant (a) from being volatilized and removed, whereby an increase of the concentration of the surfactant (a) can easily be achieved. Thus, the content of the surfactant (a) in the surfactant aqueous solution before concentration is preferably at most 30 mass%, more preferably at most 10 mass%. Further, in order that the evaporation and concentration can be carried out more efficiently, the content of the surfactant (a) in the surfactant aqueous solution before concentration is preferably at least 1 mass%, more preferably at least 5 mass%.

In a case where the content of the surfactant (a) is low, prior to carrying out the concentration and recovery process of the present invention, the surfactant aqueous solution may be concentrated to a certain extent e.g. by a known concentration method, and then the concentration process of the present invention is carried out. The known concentration method may, for example, be a concentration method by a VVCC concentrator manufactured by Sasakura Engineering Co., .Ltd.

The surfactant aqueous solution is preferably at least one aqueous solution selected from the group consisting of an aqueous solution (A1) obtained by separating, from an aqueous dispersion of a fluorinated polymer obtained by emulsion polymerization or suspension polymerization of at least one fluorinated monomer in the presence of the surfactant (a), the fluorinated polymer, an aqueous solution (A2) having exhaust gas discharged at the time of drying or heat treatment of the fluorinated polymer, absorbed, and an aqueous solution (A3) used for cleaning the fluorinated polymer, more preferably the aqueous solution (A1).

The aqueous solution (A1) is particularly preferably an aqueous solution obtained by separating, from a solution of a homopolymer or copolymer obtained by polymerizing a fluorinated monomer, or a copolymer obtained by polymerizing a fluorinated monomer and another monomer other than the fluorinated monomer, the obtained polymer.

A method of separating the obtained polymer from the aqueous dispersion of the polymer may, for example, be a method of agglomerating the polymer by salting out, by stirring under high shearing force or by both at the same time, and recovering the supernatant liquid to separate the polymer.

The aqueous solution (A1) contains, in addition to the surfactant (a) used at the time of polymerization of the fluorinated monomer, a floating solid matter such as an unagglomerated fluorinated polymer and a substance which can be a floating solid matter (hereinafter referred to as "SS content").

The substance which can be a floating solid matter may, for example, be a metal salt used for agglomeration of the fluorinated polymer by salting out, a substance which precipitates by the pH change of the aqueous solution (A1) and a substance which precipitates by a decrease or an increase of the temperature of the aqueous solution (A1).

The content of the SS content in the aqueous solution (A1) (100 mass%) is preferably at most 0.2 mass%, particularly preferably at most 0.1 mass%, whereby it is easy to prevent the SS component from being attached to the interior of the device and the evaporation efficiency from being lowered.

To remove the SS content from the aqueous solution (A1), salting out by adding a metal salt containing a polyvalent metal cation (salting agent) to agglomerate the SS content may, for example, be mentioned.

Specific examples of the metal salt include metal chlorides such as aluminum chloride, aluminum chloride hexahydrate, magnesium chloride, magnesium chloride hexahydrate, ferrous chloride, ferric chloride, ferric chloride hexahydrate and polyaluminum chloride. Among them, aluminum chloride and aluminum chloride hexahydrate are preferred.

In a case where the SS content is to be removed, it is preferred to add hydrochloric acid to the aqueous solution (A1) until the pH becomes at most 2, to add aluminum chloride in an amount of from 100 to 120 mass ppm to the aqueous solution (A1), and to stir the mixture by a stirring apparatus having high shearing force, whereby it is easy to prevent the surfactant (a) from forming a layered double hydroxide to make the recycle treatment difficult. However, even by addition of a small amount of aluminum chloride, aluminum hydroxide may form in the subsequent step of redissolving the compound (1) in an alkali aqueous solution, and by removal of moisture in the concentrated liquid in the subsequent concentration step, for example in a heater 14, hardly removable aluminum oxide will form in an evaporator, thus remarkably lowering the heat transfer effect. Accordingly a method of adding polysilica iron in an amount of at most 1 mass% instead of aluminum chloride may also be mentioned.

Further, the agglomerate to be obtained by the above salting out may be precipitated in a state where it includes the surfactant (a) therein, and accordingly it is preferred to re-dissolve the included surfactant (a) in the aqueous medium by adding sodium hydroxide, potassium hydroxide or the like to the aqueous solution (A1) to adjust the pH to be at least 3.

To remove the agglomerate of the SS content agglomerated by the salting out, a known solid-liquid separation method may be employed. Particularly, preferred is at least one method selected from the group consisting of filtration, decantation, centrifugal separation and gravity settling.

Filtration is carried out preferably under elevated pressure. Further, it is also preferred that the aqueous solution (A1) containing the agglomerate is left at rest, whereby the agglomerate settles down, and the supernatant liquid is subjected to filtration to remove the agglomerate.

The aqueous solution (A2) may, for example, be an aqueous solution which has absorbed exhaust gas containing droplets of a very small amount of solid discharged, at the time when the fluorinated polymer separated from the aqueous dispersion of the fluorinated polymer is dried and/or subjected to heat treatment by a heat treatment apparatus such as an oven, from the heat treatment apparatus.

The aqueous solution (A3) may, for example, be an aqueous solution used for cleaning the fluorinated polymer separated from the aqueous dispersion of the fluorinated polymer, with water.

Now, as one example of the process for concentrating and recovering a surfactant aqueous solution of the present invention, a process using a concentration/recovery apparatus 1 as shown in Fig. 1 will be described below.

A concentration/recovery apparatus 1 comprises, as shown in Fig. 1, a stock solution storage tank 10 in which a surfactant aqueous solution before concentration (hereinafter sometimes referred to as stock solution) is stored, an evaporator 12 which evaporates and concentrates the surfactant aqueous solution, a superheater 14 which superheats the surfactant aqueous solution withdrawn from the evaporator 12, and a condenser which condenses vapor formed in the evaporator 12.

The stock solution storage tank 10 and the evaporator 12 are connected by a piping 18, and the stock solution is supplied from the stock solution storage tank 10 to the evaporator 12.

Further, the bottom of the evaporator 12 and the superheater 14 are connected by a piping 24 which has a circulating pump 20 and a valve 22 provided in the middle thereof. From between the circulating pump 20 and the valve 22 in the piping 24, a piping 28 having a valve 26 provided in the middle thereof branches off. Further, the superheater 14 and the upper portion of the evaporator 12 are connected by a piping 30, and at the tip of the piping 30, a nozzle 32 having a shape such that the outlet side first narrows and then widens outward is provided. By such a structure, the surfactant aqueous solution withdrawn from the bottom of the evaporator 12 is superheated by the superheater 14, sprayed from the nozzle 32 into the evaporator 12 and flush-evaporated, whereby the surfactant aqueous solution is evaporated and concentrated while being circulated.

Further, the upper portion of the evaporator 12 and a condenser 16 are connected by a piping 34, and to the condenser 16, a piping 38 having a vacuum pump 36 provided in the middle thereof and a piping 42 having a condensed water pump 40 provided in the middle thereof are connected. By such a structure, vapor formed in the evaporator 12 is recovered in the condenser 16 and cooled to obtain condensed water, and then exhaust gas is discharged through the piping 38 and the condensed water is discharged through the piping 42.

The material of the evaporator 12 is not particularly limited and may, for example, be SS400 the surface of which is coated with a resin.

The shape and the size of the evaporator 12 are not particularly limited.

The superheater 14 is one which can sufficiently superheat the surfactant aqueous solution sent from the evaporator 12, and may, for example, be a superheater which superheats the surfactant aqueous solution by heat exchange with vapor. Particularly in view of energy saving, it is preferred that vapor of an aqueous solvent is recovered from an ejector (vapor jet vacuum pump) from the upper portion of the evaporator 12, and the vapor of the aqueous solvent recovered by the ejector is heated and sent to the superheater 14 and used for superheating the surfactant aqueous solution in the superheater 14.

The condenser 16 is one which can sufficiently condense the vapor of the aqueous solvent recovered from the evaporator 12 and may, for example, be a common shell and tube type heat exchanger.

Fig. 2(A) is a cross-sectional view illustrating the above nozzle 32 along the flow path axis, and Fig. 2(B) is a cross-sectional view illustrating the nozzle 32 in a plane vertical to the flow path axis.

The nozzle 32 has a pressurizing portion 32a where the inner diameter of the flow path gradually decreases, an open portion where the inner diameter of the flow path gradually increases, and a connecting portion 32c having a constant inner diameter of the flow path, connecting the pressurizing portion 32a and the open portion 32b. That is, the nozzle 32 has a shape such that the outlet side of the flow path first narrows and then widens outward. By such a structure, the surfactant aqueous solution in an annular flow or an annular mist flow by being superheated by the superheater 14 is pressurized and once condensed in the nozzle 32 and then sprayed from the nozzle 32.

Further, the nozzle 32 has a plurality of protrusions 32d extending from the inner wall toward the flow path axis direction, in the vicinity of the outlet. By the protrusions 32d provided, the superheated fluid will not unevenly flow and can be sprayed more uniformly.

The nozzle 32 is preferably such that the angle $\theta$ at which the inner wall opens at the open portion 32b is at least 90°, whereby the spray angle of the surfactant aqueous solution sprayed can be at least 90°.

If the surfactant aqueous solution sprayed from the nozzle 32 reaches the liquid level of the surfactant aqueous solution stored in the evaporator 12 in a state where discharge of the superheated heat is not completed, the surfactant aqueous solution may boil and foam at the point where it reaches. By the spray angle of the surfactant aqueous solution sprayed from the nozzle 32 being at least 90°, the aqueous solvent in the sprayed surfactant aqueous solution is likely to be sufficiently evaporated until the sprayed surfactant aqueous solution reaches the liquid level of the surfactant aqueous solution stored in the evaporator 12.

The above angle $\theta$ is preferably at least 100°, particularly preferably at least 120°, whereby it is easy to prevent the surfactant aqueous solution stored in the evaporator 12 from boiling and foaming. Further, the angle $\theta$ is preferably at most 180°, particularly preferably at most 150°, whereby it is easy to spray the superheated fluid to the liquid level in the evaporator at high speed to break the bubbles.

The number of the nozzle 32 is one in this example, but is not particularly limited.

The number of the nozzle from which the superheated surfactant aqueous solution is sprayed into the evaporator is preferably from 1 to 10, more preferably from 2 to 8, further preferably from 3 to 6.

As described above, by the process using a plurality of straight pipes as disclosed in Patent Document 2, the superheated surfactant aqueous solution unevenly flows in some of the straight pipes, and when the concentrated liquid supplied from the straight pipes reaches the liquid level of the concentrated liquid staying in the evaporator, foaming may occur. It is considered that this problem cannot be prevented unless a special apparatus such as a ring-shaped header is used.

Whereas, in the concentration/recovery apparatus 1 in the present invention, since the superheated surfactant aqueous solution is pressurized at the pressurizing portion 32 on the outlet side of the nozzle 32, it can be uniformly sprayed from each nozzle even if the apparatus has a plurality of nozzles.

The concentration/recovery apparatus 1 is preferably apparatus capable of concentration operation with the interior of the evaporator in a reduced pressure state. Further, preferred is a flush concentration apparatus provided with an ejector, in view of high energy efficiency. Specifically, a FTC concentrator, an RHC-F concentrator, a VVCC-F concentrator and a STC-F concentrator manufactured by Sasakura Engineering Co., Ltd. may, for example, be mentioned. Such apparatus is preferred also in view of energy saving, such that vapor evaporated in the evaporator is sucked by the ejector and sent to the superheater together with the drive steam of the ejector and can be used as a heat source for the surfactant aqueous solution withdrawn from the evaporator.

The process for concentrating and recovering a surfactant aqueous solution of the present invention using the concentration/recovery apparatus 1 is carried out as follows.

The surfactant aqueous solution is supplied from the stock solution storage tank 10 to the evaporator 12 and is stored in the evaporator 12. The temperature (T1, unit:°C) of the surfactant aqueous solution stored in the evaporator 12 is lower than the boiling point (bp1, unit: °C) of the aqueous medium under the pressure in the evaporator 12 (T1 <bp1). That is, the surfactant aqueous solution to be stored in the evaporator 12 is stored in a state where it does not boil.

By the surfactant stored in the evaporator 12 not boiling, it is possible to prevent the surfactant aqueous solution in the evaporator 12 during evaporation and concentration from foaming.

The temperature T1 of the surfactant aqueous solution in the evaporator is preferably at most (bp1-2)°C, more preferably at most (bp1-5)°C, most preferably at most (bp1-10)°C.

The temperature T1 is preferably at most 99°C, more preferably at most 80°C, particularly preferably from 50 to 70°C.

The pressure condition in the evaporator 12 is preferably reduced pressure, and in a case where the aqueous medium is water and can be treated as water vapor or hot water, a case where the capacity of the condenser 16, the vacuum pump 36, the ejector or the like is high, etc., the pressure is more preferably at most 101 kPa, most preferably 50 kPa, whereby the load of the superheater 14 can be reduced. Further, in a case where the evaporator 12 is in a reduced pressure condition, the surfactant aqueous solution as the stock solution can be supplied from the stock solution storage tank 10 to the evaporator 12 without a pump, such being preferred in view of reduction of the equipment cost.

Further, by increasing the distance from the nozzle 32 to the liquid level of the surfactant aqueous solution stored in the evaporator 12, the aqueous solvent in the sprayed surfactant aqueous solution is likely to be sufficiently evaporated until the sprayed surfactant aqueous solution reaches the liquid level of the surfactant aqueous solution stored in the evaporator 12. Accordingly, the amount of the surfactant aqueous solution stored in the evaporator 12 is preferably at most 20%, more preferably at most 15% to the capacity of the evaporator 12. Further, the amount of the solution is preferably at least 10%.

Further, in the concentration/recovery apparatus 1, in a state where the valve 26 is closed and the valve 22 is opened, the surfactant aqueous solution is withdrawn from the bottom of the evaporator 12 through the piping 24 by the circulating pump 20 and sent to the superheater 14, the surfactant aqueous solution is superheated in the superheater 14, sent to the evaporator 12 through the piping 30 and sprayed from the nozzle 32 into the evaporator 12.

The liquid flowing in the piping is, by being superheated, in any state in region I to be in an annular flow or in an annular mist flow (see fig.4 flow patterns HH and JJ), region II to be in an intermittent flow, a churn flow or a plug flow, region III to be in a bubbly flow and region IV to be in a dispersed flow. The flow rate of the fluid is higher due to a high proportion of the vapor phase in region II than regions III and IV and in region I than region II.

Superheating of the surfactant aqueous solution in the superheater 14 in the present invention is carried out to satisfy the conditions that all the surfactant (a) and the aqueous solvent in the surfactant aqueous solution are in an annular flow or an annular mist flow (superheated liquid mist state) in region I, i.e. conditions of the following formulae (3) and (4) calculated from "Transition formula of the liquid-vapor two phase flow in vertical piping". The following formula (3) means above the boundary between region I and region II in the graph of Fig. 3, and the following formula (4) means the left side of the boundary between region I and region IV in the graph of Fig. 3 (the revised sixth edition, Kagaku Kogyo Binran (Chemical Engineering Handbook), published by The Society of Chemical Engineers, Japan, p. 298 to 299).

$$u(G) > \left[\frac{Ku(G)^{0.2} \times Fr(G)^{0.36}}{1.9}\right]^{8} \times u(L) \quad \cdots \quad (3)$$

$$u(L) < \left[\frac{(\rho_L - \rho_G) \times d \times g}{2 \times f_L \times \rho_L}\right]^{0.5} \times \left[\frac{1.7}{\left\{\frac{\sigma}{(\rho_L - \rho_G) \times g \times d^2}\right\}^{-0.25}}\right] \quad \cdots (4)$$

In the above formulae, u(G) represents the gas superficial velocity (m/s) in the piping 30, u(L) the liquid superficial velocity (m/s) in the piping 30, Ku(G) the Kutdelaze number, Fr(G) the Froude number, $\rho_L$ the liquid density (kg/$m^3$) of the surfactant aqueous solution, $\rho_G$ the gas density (kg/$m^3$) of gas obtained by vaporizing the surfactant aqueous solution, d the inner diameter (m) of the piping 30 on the upstream side of the nozzle 32, g the gravitational acceleration (m/$s^2$), and $\sigma$ the surface tension (N/m) of the surfactant aqueous solution. Further, $f_L$ is the coefficient of friction, and is $f_L$=16/Re in the case of the laminar flow and $f_L=0.079 \times Re^{-1/4}$ (wherein Re is the Reynolds number) in the case of the turbulent flow.

Further, the correction coefficients Φ1 and Φ2 in region I in Fig. 3 are as follows.

$$\Phi 1=(\rho_{G0}/\rho_G)^{0.23}\times(\Delta\rho/\Delta\rho_0)^{0.11}\times(\sigma/\sigma_0)^{0.11}\times(d/d_0)^{0.415}$$

$$\Phi 2=1$$

wherein do=2.54(cm), $\rho_{G0}$=1.3(kg/$m^3$), $p_{L0}$=1000(kg/$m^3$), $\sigma_0$=0.07(N/m), $\Delta\rho=\rho_L-\rho_G$, and $\Delta\rho_0=\rho_{L0}-\rho_{G0}$.

By superheating the surfactant aqueous solution in the superheater 14 so as to satisfy the above conditions, the proportion of the vapor phase of the surfactant aqueous solution sent to the nozzle 32 tends to be high, and the aqueous solvent in the surfactant aqueous solution sprayed from the nozzle 32 into the evaporator 12 is sufficiently evaporated before the surfactant aqueous solution reaches the liquid level of the surfactant aqueous solution stored in the evaporator 12. Accordingly, it is possible to prevent the concentrated liquid, of which discharge of the superheated heat is not completed, from reaching the liquid level of the surfactant aqueous solution stored in the evaporator 12 and the surfactant aqueous solution from boiling and foaming at a point where it reaches.

Further, for example, as described above, in a case where vapor of the aqueous solvent is recovered from the evaporator 12 by an ejector and utilized for superheating the surfactant aqueous solution in the superheater 14, the pressure in the evaporator 12 fluctuates due to external factors such as a decrease in the pressure of the vapor driving the ejector, and bubbles may form at the liquid level of the surfactant aqueous solution stored in the evaporator 12. However, by superheating so as to satisfy the above conditions, the speed of the surfactant aqueous solution sprayed from the nozzle 32 is dramatically higher than the speed in a case where the surfactant aqueous solution is superheated to be in regions II to IV, and even if bubbles form at the liquid level of the surfactant aqueous solution stored in the evaporator 12, since the effect to break bubbles by the mist fluid is excellent, foaming can sufficiently be suppressed.

Superheating of the surfactant aqueous solution by the superheater 14 is carried out to satisfy the above conditions preferably by adjusting the temperature of the vapor to be used for superheating to be constant and by adjusting the flow rate of the surfactant aqueous solution to be supplied to the superheater 14 by the circulating pump 20 depending upon the pressure in the evaporator 12, the physical properties of the surfactant aqueous solution, the temperature T1 of the surfactant aqueous solution in the evaporator 12, etc.

The temperature of the vapor to be used for superheating the surfactant aqueous solution is preferably from 120 to 179°C, more preferably from 143 to 158°C.

The temperature of the surfactant aqueous solution after it passes through the superheater 14 is preferably at least (T1+2)°C, more preferably at least (T1+5)°C, most preferably at least (T1+10)°C. Further, the temperature is preferably at most 100°C. The pressure of the vapor phase in the evaporator is preferably at most 101 kPa, more preferably at most 50 kPa, most preferably at most 20 kPa. Further, the pressure is preferably at least 10 kPa.

The surfactant aqueous solution superheated to satisfy the above conditions is once condensed and then sprayed into the evaporator 12 by the nozzle 32 having a shape such that the outlet once narrows and then widens outward, whereby a part of the aqueous medium is flush-evaporated. Further, the vapor of the aqueous medium which is liquid-vapor separated from the concentrated liquid is removed through the piping 34 connected to the upper portion of the evaporator 12 by suction by the vacuum pump 36.

The vapor of the aqueous solvent formed in the evaporator 12 is sent to the condenser 16 through the piping 34 by the vacuum pump 36 and is condensed. The condensed water formed by condensation is discharged through the piping 42 by the condensed water pump 40, and the exhaust gas is discharged through the piping 38.

After the concentration/recovery apparatus 1 is continuously operated and a condensed liquid in which the concentration of the surfactant (a) is increased to the desired content, is obtained, the valve 22 is closed and the valve 26 is opened to recover the concentrated liquid.

In the present invention, concentration is carried out preferably until the content of the surfactant (a) in the concentrated liquid (100 mass%) becomes at least from 2 to 50 mass%, more preferably at least from 8 to 20 mass%. When the content of the surfactant (a) is at least 2 mass%, evaporation and concentration are possible with high efficiency. Further, when the content of the surfactant (a) is at most 50 mass%, the volatilization loss of the surfactant component can be reduced.

By the above-described process for concentrating and recovering a surfactant aqueous solution of the present invention, it is possible to evaporate and concentrate the surfactant aqueous solution while suppressing foaming thereby to easily obtain a surfactant aqueous solution, the concentration of which is increased, with high efficiency, thereby to recover the surfactant.

In the process of the present invention, within a range where foaming can sufficiently be suppressed, the flow state of the surfactant aqueous solution superheated during evaporation and concentration may be temporarily in a state of region II such as a plug flow, a churn flow or an intermittent flow.

EXAMPLES

Now, the present invention will be described in further detail with reference to Examples, but the present invention is by no means limited thereto. Examples 1 to 4 are Examples of the present invention, and Example 5 is a Comparative Example.

[Method of measuring SS content]

0.7 g of a solution to be measured was put in each of two aluminum cups, and such test liquids were dried at 200°C and at 650°C respectively until the mass no more changed, and the evaporation residue (inorganic salt) obtained after drying at 650°C was subtracted from the evaporation residue (the sum of the inorganic salt and PTFE) obtained after drying at 200°C to determine the SS content.

[Example 1]

<Preparation of surfactant aqueous solution>

Using as a surfactant $C_2F_5OC_2F_4OCF_2COONH_4$ (hereinafter referred to as EEA) and $CF_3(CF_2)_6COONH_4$ (hereinafter referred to as APFO), tetrafluoroethylene (TFE) was subjected to emulsion polymerization to obtain an aqueous dispersion of polytetrafluoroethylene (PTFE). The obtained aqueous dispersion was agglomerated, and the precipitated PTFE was separated to obtain an agglomerate waste liquid (SS content: 2,300 mass ppm, hereinafter referred to as agglomerate waste liquid 1). The content of the surfactant in the agglomerate waste liquid 1 was 400 mass ppm, and the EEA and APFO contents were respectively 360 mass ppm and 40 mass ppm. Then, 35 mass% of industrial hydrochloric acid was added to the agglomerate waste liquid 1 until the pH became 2, and aluminum chloride hexahydrate in an amount of 120 mass ppm to the agglomerate waste liquid 1 was added, followed by stirring for 5 minutes to agglomerate non-agglomerated PTFE in the agglomerate waste liquid 1. Then, a 20 mass% sodium hydroxide aqueous solution was added until the pH of the agglomerate waste liquid 1 became 10.5, followed by stirring for 5 minutes. Then, the liquid was left at rest for 1 hour, and the supernatant liquid of the agglomerate waste liquid 1 was recovered as a surfactant aqueous solution A. The surfactant aqueous solution A was colorless and transparent, had a SS content of 40 mass ppm, and a surfactant content (the total of EEA and APFO, the same applies hereinafter) of 398 mass ppm.

Then, as preliminary concentration, the surfactant aqueous solution A was concentrated under reduced pressure by using a heating tube surface evaporating concentrator (WCC concentrator, tradename, manufactured by Sasakura Engineering Co., Ltd.) equipped with a heat pump. The amount of supply of the surfactant aqueous solution A to the WCC concentrator was 4,000 L/hr, and the interior of the WCC concentrator was maintained under 20 kPa. Further, the temperature of the circulating liquid in the WCC concentrator was maintained at 55±2°C. 120,000 L of the surfactant aqueous solution A was concentrated 60-fold over a period of 30 hours to obtain 2,000 L of a surfactant aqueous solution B having a surfactant content of 2.4 mass%. The content of the surfactant in the condensed liquid discharged from the VVCC concentrator was measured every one hour by means of colorimetric analysis with methylene blue, whereupon the maximum content was 5 mass ppm, and the average content was 3 mass ppm.

The colorimetric analysis method with methylene blue will be described. A methylene blue reagent is prepared by gradually adding 12 g of sulfuric acid to about 500 ml of water, followed by cooling, and dissolving 0.03 g of methylene blue and 50 g of anhydrous sodium sulfate therein, and adding water to obtain 1L of a reagent. Then, in a screw vial, 5 ml of the methylene blue reagent and 5 ml of chloroform are put, and 0.1 g of a sample (concentrated liquid) is added and vigorously shaken, and the liquid is left at rest for separation. The lower layer chloroform layer is recovered in a cell for measurement of absorbance with a dropper, and the absorbance at a wavelength of 630 nm is measured by a spectrophotometer. The concentration of the compound (1) is known from the obtained absorbance with reference to a preliminarily prepared analytical curve from a sample having a known concentration.

<Evaporation and concentration test>

Using a flush concentrator (FTC concentrator, tradename, manufactured by Sasakura Engineering Co., Ltd.) equipped with an ejector, the surfactant aqueous solution B was further concentrated. The concentrator was equipped with an ejector which recovers vapor formed in the evaporator, and utilizes the recovered vapor for superheating the surfactant aqueous solution withdrawn from the evaporator. Further, this concentrator has the same structure as the concentration/recovery apparatus 1 shown in Fig. 1 except that it has four nozzles for spraying the superheated surfactant aqueous solution B into the evaporator, as shown in Fig. 2.

At the initial stage of operation, for the purpose of suppressing foaming of the aqueous solution in the evaporator, operation was started using industrial water. Specifically, industrial water was charged up to 40% of the capacity of the evaporator in the FTC concentrator, the pressure in the evaporator was reduced to 17 kPa, and the amount of the circulating liquid was adjusted so that the temperature of the industrial water in the evaporator became 55°C. Then, at the time when the pressure in the evaporator became 17 kPa, the liquid phase temperature became 55°C and the vapor phase temperature became 65°C, the amount of the industrial water in the evaporator was reduced to 20% of the capacity of the evaporator, and supply of the surfactant aqueous solution B was started.

During the concentration operation, the pressure in the evaporator was maintained at 17 kPa. Further, the liquid phase temperature in the evaporator was maintained at 55°C. Here, the boiling point of water under a pressure of 17 kPa is 57°C.

The surfactant aqueous solution B withdrawn from the evaporator was superheated, sprayed from the nozzles into the evaporator and flush-evaporated, the formed vapor was removed, and 3,500L of the surfactant aqueous solution B was concentrated to 250L over a period of 12 hours to obtain a concentrated liquid. The temperature of the vapor used for superheating was 158°C, the flow rate of the surfactant aqueous solution B withdrawn from the evaporator to the superheater was 1.0 m/sec, and the flow state of the superheated surfactant aqueous solution B was as shown in Table 1.

The EEA concentration of the condensed liquid discharged from the FTC concentrator was measured every 1 hour by colorimetric analysis with methylene blue, whereupon the maximum concentration was 12 mass ppm, and the average concentration was 7 mass ppm.

By carrying out the evaporation and concentration operation while suppressing foaming in the evaporator, a concentrated liquid having a surfactant content of 32.4 mass% was obtained.

[Table 1]

| | |
|---|---|
| Ku(G) [-] | $2.44 \times 10^3$ |
| Fr(G) [-] | $1.41 \times 10^2$ |
| $\rho_L$ [kg/m$^3$] | 985 |
| $\rho_G$ [kg/m$^3$] | 0.109 |
| d [m] | 0.0900 |
| $f_L$ [-] | 0.0135 |
| $\sigma$ [N/m] | 0.0869 |
| u(G) | 132 |
| u(L) | 0.0146 |
| $\Phi$1 | 2.97 |
| $\Phi$2 | 1.00 |
| u(G)/$\Phi$1 | 44.5 |
| u(L)/$\Phi$2 2 | 0.0146 |
| Flow state | Annular mist flow |

[Examples 2 to 4]

A concentrated liquid was obtained in the same manner as in Example 1 except that the pressure in the evaporator was 100 kPa (Example 2), 50 kPa (Example 3) or 20 kPa (Example 4).

In each Example, the surfactant aqueous solution could be evaporated and concentrated while suppressing foaming in the evaporator. A concentrated liquid having a surfactant content of 33 mass% (Example 2), 31 mass% (Example 3) or 35 mass% (Example 4) was obtained.

[Example 5]

A 1 mass% concentrated liquid was evaporated and concentrated to 5 mass% under conditions in Example 1. Then, the amount of the circulating liquid was increased, whereupon the state of the flow of the fluid sprayed from the spray nozzles became an intermittent flow, and foaming immediately occurred under the liquid level in the evaporator.

INDUSTRIAL APPLICABILITY

By the process for concentrating and recovering a surfactant aqueous solution of the present invention, a surfactant aqueous solution can be evaporated and concentrated while suppressing foaming, and a surfactant aqueous solution, the concentration of which is increased, can easily be obtained with high efficiency, whereby a surfactant can be recovered and recycled. Thus, the process of the present invention is industrially useful.

REFERENCE SYMBOLS

1: Concentration/recovery apparatus
10: Stock solution storage tank
12: Evaporator
14: Superheater
16: Condenser
18, 24, 28, 30, 34, 38, 42: Piping
20: Circulating pump
22, 26: Valve
32: Nozzle
36: Vacuum pump
40: Condensed water pump

## Claims

**1.** A process for concentrating and recovering a surfactant aqueous solution, by evaporating and concentrating a surfactant aqueous solution containing a gasifiable surfactant and an aqueous solvent to increase the concentration of the surfactant, which comprises:

storing the surfactant aqueous solution in an evaporator (12); adjusting the temperature of the surfactant aqueous solution in the evaporator to be lower than the boiling point of the aqueous solvent under the pressure in the evaporator;
withdrawing a part of the surfactant aqueous solution from the evaporator, superheating it in a superheater (14) under conditions that all the surfactant and the aqueous solvent are formed into an annular flow or an annular mist flow, once pressure-condensing the surfactant aqueous solution in a nozzle and spraying it into the evaporator by the nozzle (32) having a shape such that the outlet side first narrows and then widens outward; and evaporating and removing the aqueous solvent,
wherein the superheater and an upper portion of the evaporator (12) are connected by a piping (30).
wherein the superheating of the surfactant aqueous solution in the superheater is carried out to satisfy the conditions of the following formulae (3) and (4) calculated from "Transition formula of the liquid-vapor two phase flow in vertical piping",

$$u(G) > \left[\frac{Ku(G)^{0.2} \times Fr(G)^{0.36}}{1.9}\right]^{8} \times u(L) \quad \cdots (3)$$

$$u(L) < \left[\frac{(\rho_L - \rho_G) \times d \times g}{2 \times f_L \times \rho_L}\right]^{0.5} \times \left[\frac{1.7}{\left\{\frac{\sigma}{(\rho_L - \rho_G) \times g \times d^2}\right\}^{-0.25}}\right] \quad \cdots (4)$$

in the above formulae, u(G) represents the gas superficial velocity (m/s) in the piping, u(L) the liquid superficial velocity (m/s) in the piping, Ku(G) the Kutdelaze number, Fr(G) the Froude number, $\rho_L$ the liquid density (kg/m$^3$) of the surfactant aqueous solution, $\rho_G$ the gas density (kg/m$^3$) of gas obtained by vaporizing the surfactant aqueous solution, d the inner diameter (m) of the piping on the upstream side of the nozzle, g the gravitational acceleration (m/s$^2$), and $\sigma$ the surface tension (N/m) of the surfactant aqueous solution, further, $f_L$ is the coefficient of friction, and is $f_L$=16/Re in the case of the laminar flow and $f_L$=0.079$\times$Re$^{-1/4}$ (wherein Re is the Reynolds number) in the case of the turbulent flow, and
wherein the nozzle has a pressurizing portion where the inner diameter of the flow path gradually decreases, an open portion where the inner diameter of the flow path gradually increases, and a connecting portion having a constant inner diameter of the flow path, connecting the pressurizing portion and the open portion, wherein the angle at which the inner wall opens at the open portion of the nozzle is from 90 to 180°.

2. The process for concentrating and recovering a surfactant aqueous solution according to Claim 1, wherein the surfactant is a $C_{4-10}$ fluorinated surfactant.

3. The process for concentrating and recovering a surfactant aqueous solution according to Claim 1 or 2, wherein the content of the surfactant in the surfactant aqueous solution is from 1 to 30 mass%.

4. The process for concentrating and recovering a surfactant aqueous solution according to any one of Claims 1 to 3, wherein the pressure in the evaporator is at most 101 kPa.

5. The process for concentrating and recovering a surfactant aqueous solution according to any one of Claims 1 to 4, wherein the temperature of the surfactant aqueous solution in the evaporator is at most 99°C.

6. The process for concentrating and recovering a surfactant aqueous solution according to Claim 2, wherein the fluorinated surfactant is at least one fluorinated surfactant selected from the group consisting of a compound represented by the following formula (1) and a compound represented by the following formula (2):

$R^{F1}O(CF_2CF_2O)_aCF_2COOX^1$ (1)

$CF_3(CF_2)_bCOOX^2$ (2)

wherein $R^{F1}$ is a $C_{1-4}$ perfluoroalkyl group, $X^1$ is a hydrogen atom, an alkali metal or $NH_4$, and a is an integer of from 1 to 3; and $X^2$ is a hydrogen atom, an alkali metal or $NH_4$, and b is an integer of from 3 to 7.

7. The process for concentrating and recovering a surfactant aqueous solution according to Claim 6, wherein the fluorinated surfactant represented by the formula (1) is ammonium salt of $C_2F_6OCF_2CF_2OCF_2COOH$.

8. The process for concentrating and recovering a surfactant aqueous solution according to Claim 6, wherein the fluorinated surfactant represented by the formula (2) is ammonium perfluorooctanoate or ammonium perfluorononanoate.

9. The process for concentrating and recovering a surfactant aqueous solution according to any one of Claims 1 to 8, wherein the surfactant aqueous solution is at least one aqueous solution selected from the group consisting of an aqueous solution obtained by separating, from an aqueous dispersion of a fluorinated polymer obtained by emulsion polymerization or suspension polymerization of at least one fluorinated monomer in the presence of the surfactant, the fluorinated polymer, an aqueous solution having exhaust gas discharged at the time of drying or heat treatment of the fluorinated polymer, absorbed, and an aqueous solution used for cleaning the fluorinated polymer.

**Patentansprüche**

1. Verfahren zum Konzentrieren und Rückgewinnen einer wässrigen Lösung eines grenzflächenaktiven Mittels durch das Verdampfen und das Konzentrieren einer wässrigen Lösung eines grenzflächenaktiven Mittels, enthaltend ein vergasbares grenzflächenaktives Mittel und ein wässriges Lösungsmittel, um die Konzentration des grenzflächenaktiven Mittels zu erhöhen, welches umfasst:

   das Aufbewahren der wässrigen Lösung eines grenzflächenaktiven Mittels in einem Verdampfer (12);
   das Einstellen der Temperatur der wässrigen Lösung eines grenzflächenaktiven Mittels in dem Verdampfer um niedriger zu sein als der Siedepunkt des wässrigen Lösungsmittels unter dem Druck in dem Verdampfer;
   das Entnehmen eines Teils der wässrigen Lösung eines grenzflächenaktiven Mittels aus dem Verdampfer, das Überhitzen desselben in einem Überhitzer (14) unter Bedingungen, bei welchen die Gesamtheit des grenzflächenaktiven Mittels und des wässrigen Lösungsmittels zu einer Ringströmung oder einer Ringnebelströmung gebildet werden, das einmalige Druckkondensieren der wässrigen Lösung eines grenzflächenaktiven Mittels in einer Düse und das Sprühen derselben in den Verdampfer durch die Düse (32), die eine solche Form aufweist, dass die Austrittsseite sich zunächst verschmälert und sich dann nach außen weitet; und
   das Verdampfen und das Entfernen des wässrigen Lösungsmittels,
   wobei der Überhitzer und ein oberer Teil des Verdampfers (12) durch ein Rohrleitungssystem (30) verbunden sind,
   wobei das Überhitzen der wässrigen Lösung eines grenzflächenaktiven Mittels in dem Überhitzer ausgeführt wird, um die Bedingungen der folgenden Formeln (3) und (4), berechnet aus "Transition formula of the liquid-vapor two phase flow in vertical piping", zu erfüllen,

$$u(G) > \left[\frac{Ku(G)^{0.2} \times Fr(G)^{0.36}}{1.9}\right]^{8} \times u(L) \quad \cdots (3)$$

$$u(L) < \left[\frac{(\rho_L - \rho_G) \times d \times g}{2 \times f_L \times \rho_L}\right]^{0.5} \times \left[\frac{1.7}{\left\{\frac{\sigma}{(\rho_L - \rho_G) \times g \times d^2}\right\}^{-0.25}}\right] \quad \cdots (4)$$

   in den obigen Formeln u(G) die Gasleerrohrgeschwindigkeit (m/s) in dem Rohrleitungssystem, u(L) die Flüssigkeitsleerrohrgeschwindigkeit (m/s) in dem Rohrleitungssystem, Ku(G) die Kutateladze-Zahl, Fr(G) die Froude-Zahl, $\rho_L$ die Flüssigkeitsdichte (kg/m$^3$) der wässrigen Lösung eines grenzflächenaktiven Mittels, $\rho_G$ die Gasdichte (kg/m$^3$) des Gases, welches durch das Verdampfen der wässrigen Lösung eines grenzflächenaktiven Mittels erhalten wird, d den Innendurchmesser (m) des Rohrleitungssystems an der Zulaufseite der Düse, g die Erdbeschleunigung (m/s$^2$) und $\sigma$ die Oberflächenspannung (N/m) der wässrigen Lösung eines grenzflächenaktiven Mittels darstellt,
   weiter $f_L$ der Reibungskoeffizient ist, und $f_L$=16/Re in dem Fall der laminaren Strömung und $f_L$ =0,079$\times$Re$^{-1/4}$ (wobei Re die Reynolds-Zahl ist) in dem Fall der turbulenten Strömung ist, und
   wobei die Düse einen druckbeaufschlagenden Teil, in welchem sich der Innendurchmesser des Flließpfads graduell verkleinert, einen offenen Teil, in welchem sich der Innendurchmesser des Flließpfads graduell erhöht, und einen Verbindungsbereich mit einem konstanten Innendurchmesser des Flließpfads,
   der den druckbeaufschlagenden Teil und den offenen Teil verbindet, aufweist,
   wobei der Winkel, mit welchem sich die Innenwand an dem offenen Teil der Düse öffnet, von 90 bis 180° beträgt.

2. Verfahren zum Konzentrieren und Rückgewinnen einer wässrigen Lösung eines grenzflächenaktiven Mittels nach Anspruch 1, wobei das grenzflächenaktive Mittel ein $C_{4-10}$ fluoriertes grenzflächenaktives Mittel ist.

3. Verfahren zum Konzentrieren und Rückgewinnen einer wässrigen Lösung eines grenzflächenaktiven Mittels nach Anspruch 1 oder 2, wobei der Gehalt des grenzflächenaktiven Mittels in der wässrigen Lösung eines grenzflächenaktiven Mittels von 1 bis 30 Massen-% beträgt.

**4.** Verfahren zum Konzentrieren und Rückgewinnen einer wässrigen Lösung eines grenzflächenaktiven Mittels nach einem der Ansprüche 1 bis 3, wobei der Druck in dem Verdampfer höchstens 101 kPa beträgt.

**5.** Verfahren zum Konzentrieren und Rückgewinnen einer wässrigen Lösung eines grenzflächenaktiven Mittels nach einem der Ansprüche 1 bis 4, wobei die Temperatur der wässrigen Lösung eines grenzflächenaktiven Mittels in dem Verdampfer höchstens 99°C beträgt.

**6.** Verfahren zum Konzentrieren und Rückgewinnen einer wässrigen Lösung eines grenzflächenaktiven Mittels nach Anspruch 2, wobei das fluorierte grenzflächenaktive Mittel mindestens ein fluoriertes grenzflächenaktives Mittel, ausgewählt aus der Gruppe, bestehend aus einer Verbindung, dargestellt durch die folgende Formel (1), und einer Verbindung, dargestellt durch die folgende Formel (2), ist:

$$R^{F1}O(CF_2CF_2O)_aCF_2COOX^1 \qquad (1)$$

$$CF_3(CF_2)_bCOOX^2 \qquad (2)$$

wobei $R^{F1}$ eine $C_{1-4}$ Perfluoralkylgruppe ist, $X^1$ ein Wasserstoffatom, ein Alkalimetall oder $NH_4$ ist und a eine ganze Zahl von 1 bis 3 ist; und $X^2$ ein Wasserstoffatom, ein Alkalimetall oder $NH_4$ ist und b eine ganze Zahl von 3 bis 7 ist.

**7.** Verfahren zum Konzentrieren und Rückgewinnen einer wässrigen Lösung eines grenzflächenaktiven Mittels nach Anspruch 6, wobei das fluorierte grenzflächenaktive Mittel, dargestellt durch die Formel (1), ein Ammoniumssalz von $C_2F_5OCF_2CF_2OCF_2COOH$ ist.

**8.** Verfahren zum Konzentrieren und Rückgewinnen einer wässrigen Lösung eines grenzflächenaktiven Mittels nach Anspruch 6, wobei das fluorierte grenzflächenaktive Mittel, dargestellt durch die Formel (2), Ammoniumperfluoroctanoat oder Ammoniumperfluornonanoat ist.

**9.** Verfahren zum Konzentrieren und Rückgewinnen einer wässrigen Lösung eines grenzflächenaktiven Mittels nach einem der Ansprüche 1 bis 8, wobei die wässrige Lösung eines grenzflächenaktiven Mittels mindestens eine wässrige Lösung ist, ausgewählt aus der Gruppe, bestehend aus einer wässrigen Lösung, erhalten durch das Separieren, von einer wässrigen Dispersion eines fluorierten Polymers, erhalten durch Emulsionspolymerisation oder Suspensionspolymerisation von mindestens einem fluorierten Monomer in der Gegenwart des grenzflächenaktive Mittels, des fluorierten Polymers, einer wässrigen Lösung, welche Abgas, ausgestoßen zum Zeitpunkt des Trocknens oder des Wärmebehandelns des fluorierten Polymers, absorbiert hat, und einer wässrigen Lösung, verwendet zur Reinigung des fluorierten Polymers.

## Revendications

**1.** Procédé pour concentrer et récupérer une solution aqueuse de tensioactif, par évaporation et concentration d'une solution aqueuse de tensioactif contenant un tensioactif gazéifiable et un solvant aqueux pour augmenter la concentration du tensioactif, qui comprend :

le stockage de la solution aqueuse de tensioactif dans un évaporateur (12) ;
l'ajustement de la température de la solution aqueuse de tensioactif dans l'évaporateur de sorte qu'elle soit inférieure au point d'ébullition du solvant aqueux sous la pression dans l'évaporateur ;
le retrait d'une partie de la solution aqueuse de tensioactif hors de l'évaporateur, sa surchauffe dans un surchauffeur (14) dans des conditions telles que tout le tensioactif et le solvant aqueux soient mis sous forme d'un écoulement annulaire ou d'un écoulement de brouillard annulaire, la condensation sous pression une fois de la solution aqueuse de tensioactif dans une buse, et sa pulvérisation dans l'évaporateur par la buse (32) présentant une forme telle que le côté de sortie d'abord se rétrécisse et ensuite s'élargisse vers l'extérieur ; et
l'évaporation et l'élimination du solvant aqueux,
dans lequel le surchauffeur et une partie supérieure de l'évaporateur (12) sont connectés par une canalisation (30),
dans lequel la surchauffe de la solution aqueuse de tensioactif dans le surchauffeur est effectuée de manière à satisfaire aux conditions de formules (3) et (4) qui suivent, calculées à partir de la "formule de transition d'un écoulement à deux phases liquide-vapeur dans une canalisation verticale",

$$u(G) > \left[\frac{Ku(G)^{0.2} \times Fr(G)^{0.36}}{1.9}\right]^{8} \times u(L) \quad \cdots (3)$$

$$u(L) < \left[\frac{(\rho_L - \rho_G) \times d \times g}{2 \times f_L \times \rho_L}\right]^{0.5} \times \left[\frac{1.7}{\left\{\frac{\sigma}{(\rho_L - \rho_G) \times g \times d^2}\right\}^{-0.25}}\right] \quad \cdots (4)$$

dans les formules ci-dessus, u(G) représente la vitesse superficielle de gaz (m/s) dans la canalisation, u(L) la vitesse superficielle de liquide (m/s) dans la canalisation, Ku(G) le nombre de Kutdelaze, Fr(G) le nombre de Froude, $\rho_L$ la masse volumique liquide (kg/$m^3$) de la solution aqueuse de tensioactif, $\rho_G$ la masse volumique gazeuse (kg/$m^3$) du gaz obtenu par vaporisation de la solution aqueuse de tensioactif, d le diamètre intérieur (m) de la tuyauterie du côté amont de la buse, g l'accélération gravitationnelle (m/$s^2$), et $\sigma$ la tension de surface (N/m) de la solution aqueuse de tensioactif, en outre, $f_L$ est le coefficient de frottement, et est $f_L$ = 16/Re dans le cas d'un écoulement laminaire et $f_L$ = 0,079 x $Re^{-1/4}$ (où Re est le nombre de Reynolds) dans le cas d'un écoulement turbulent, et

dans lequel la buse comprend une partie de pressurisation où le diamètre intérieur du trajet d'écoulement diminue progressivement, une partie ouverte où le diamètre interne du trajet d'écoulement augmente progressivement, et une partie de connexion présentant un diamètre interne constant du trajet d'écoulement, connectant la partie de pressurisation et la partie ouverte, et dans lequel l'angle selon lequel la paroi interne s'ouvre sur la partie ouverte de la buse est de 90 à 180°.

**2.** Procédé pour concentrer et récupérer une solution aqueuse de tensioactif selon la revendication 1, dans lequel le tensioactif est un tensioactif fluoré en $C_4$ à $C_{10}$.

**3.** Procédé pour concentrer et récupérer une solution aqueuse de tensioactif selon la revendication 1 ou 2, dans lequel la teneur en le tensioactif de la solution aqueuse de tensioactif est de 1 à 30 % en masse.

**4.** Procédé pour concentrer et récupérer une solution aqueuse de tensioactif selon l'une quelconque des revendications 1 à 3, dans lequel la pression dans l'évaporateur est d'au plus 101 kPa.

**5.** Procédé pour concentrer et récupérer une solution aqueuse de tensioactif selon l'une quelconque des revendications 1 à 4, dans lequel la température de la solution aqueuse de tensioactif dans l'évaporateur est d'au plus 99°C.

**6.** Procédé pour concentrer et récupérer une solution aqueuse de tensioactif selon la revendication 2, dans lequel le tensioactif fluoré est au moins un tensioactif fluoré choisi dans l'ensemble constitué par un composé représenté par la formule (1) suivante et un composé représenté par la formule (2) suivante :

$R^{F1}O(CF_2CF_2O)_aCF_2COOX^1$ (1)

$CF_3(CF_2)_bCOOX^2$ (2)

formules dans lesquelles $R^{F1}$ est un groupe perfluoroalkyle en $C_1$ à $C_4$, $X^1$ est un atome d'hydrogène, un métal alcalin ou $NH_4$, et a est un entier de 1 à 3 ; et $X^2$ est un atome d'hydrogène, un métal alcalin ou $NH_4$, et b est un entier de 3 à 7.

**7.** Procédé pour concentrer et récupérer une solution aqueuse de tensioactif selon la revendication 6, dans lequel le tensioactif fluoré représenté par la formule (1) est le sel d'ammonium de $C_2F_5OCF_2CF_2OCF_2COOH$.

**8.** Procédé pour concentrer et récupérer une solution aqueuse de tensioactif selon la revendication 6, dans lequel le tensioactif fluoré représenté par la formule (2) est le perfluorooctanoate d'ammonium ou le perfluorononanoate d'ammonium.

9. Procédé pour concentrer et récupérer une solution aqueuse de tensioactif selon l'une quelconque des revendications 1 à 8, dans lequel la solution aqueuse de tensioactif est au moins une solution aqueuse choisie dans l'ensemble constitué par une solution aqueuse obtenue par séparation, à partir d'une dispersion aqueuse d'un polymère fluoré obtenu par polymérisation en émulsion ou polymérisation en suspension d'au moins un monomère fluoré en présence du tensioactif, du polymère fluoré, une solution aqueuse dont un gaz d'échappement déchargé au moment du séchage ou d'un traitement à la chaleur du polymère fluoré est absorbé, et une solution aqueuse utilisée pour le nettoyage du polymère fluoré.

Fig. 1

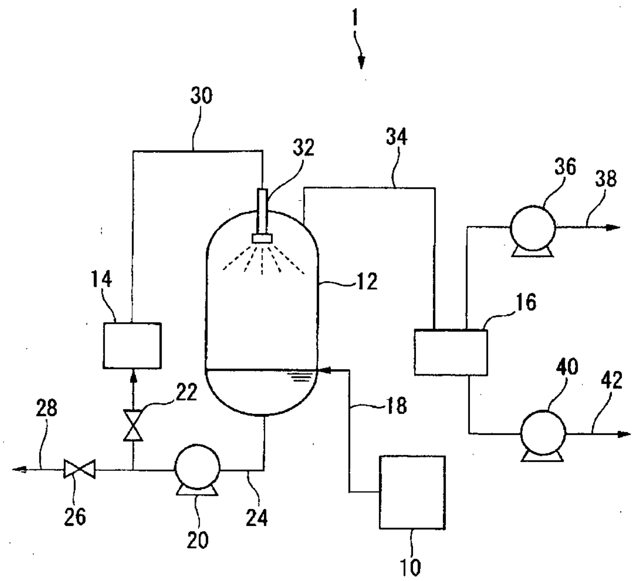
1
30
32
34
36
38
14
12
16
40
42
22
28
18
26
20
24
10

Fig. 2

(A)

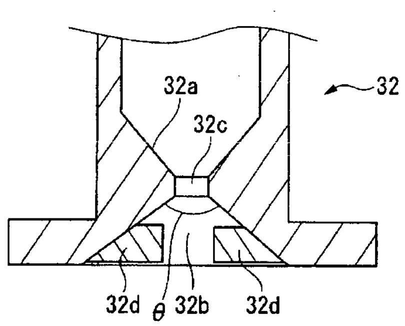
32a
32c
32
32d
θ
32b
32d

(B)

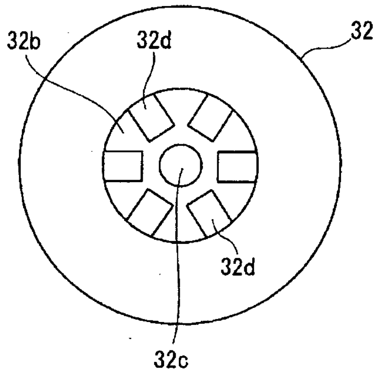
32b
32d
32
32d
32c

Fig. 3

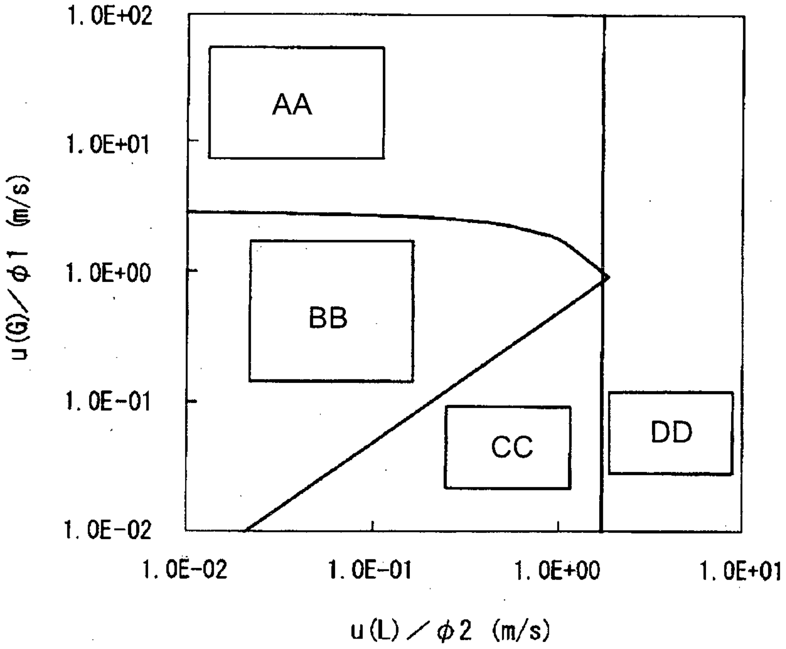


AA: Region I
Annular mist flow
Annular flow

BB: Region II
Intermittent flow
Churn flow
Plug flow

CC: Region III
Bubbly flow

DD: Region IV
Dispersed flow

Fig. 4

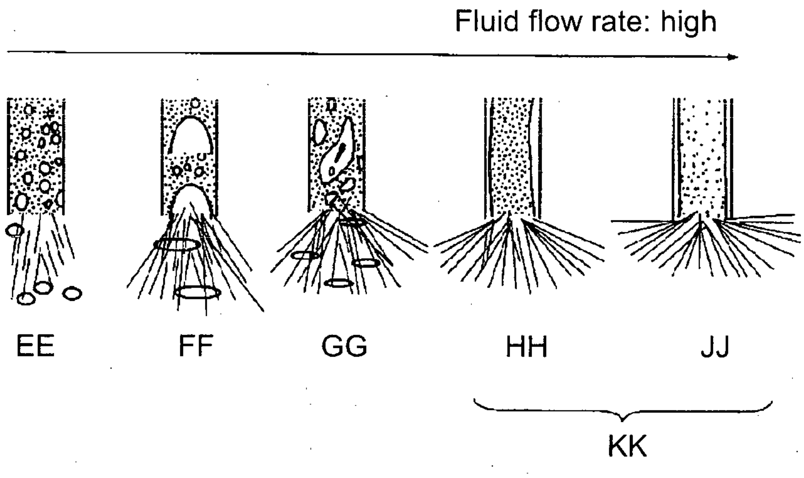


EE: Dispersed flow/bubbly flow
FF: Plug flow
GG: Churn flow/intermittent flow
HH: Annular flow
JJ: Annular mist flow
KK: Superheated liquid mist state

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0890582 A3
- JP 63054901 A
- JP 2005131616 A


### Non-patent literature cited in the description


- **KAGAKU KOGYO BINRAN.** Chemical Engineering Handbook. The Society of Chemical Engineers, 299
- **KAGAKU KOGYO BINRAN.** Chemical Engineering Handbook. The Society of Chemical Engineers, 298-299